# EUROPEAN PATENT APPLICATION

(11) **EP 4 447 508 A1**
(43) Date of publication of application: **16.10.2024**
(21) Application number: 22913515.7
(22) Date of filing: 15.09.2022
(51) Int. Cl.: H04W 8/18, H04W 8/20, H04W 8/26, H04W 4/12, H04L 5/00

(54) **COMMUNICATION METHOD AND APPARATUS**

(30) Priority: 30.12.2021 CN 202111652931
(71) Applicant: Huawei Technologies Co., Ltd., Shenzhen, Guangdong 518129 (CN)
(72) Inventor: GUO, Jiancheng, Shenzhen, Guangdong 518129 (CN); XIA, Yuan, Shenzhen, Guangdong 518129 (CN)
(74) Representative: Maiwald GmbH
(86) International application number: PCT/CN2022/118907
(87) International publication number: WO 2023/124247

(57) **Abstract**

Embodiments of this application provide a communication method and apparatus. The method includes: A first network function network element receives first information from a second network function network element, where the first information is used to request to subscribe to first data; sends second information to a third network function network element based on the first information, where the second information indicates the third network function network element to produce the first data; and sends third information to the third network function network element based on the first information, where the third information indicates to send the first data to the second network function network element, and the third information includes a routing address of the second network function network element. According to the communication method and apparatus provided in this application, a data plane network function network element can be simplified. This facilitates data transmission between network elements, and improves communication efficiency.

## Description

This application claims priority to Chinese Patent Application No. 202111652931.6, filed with the China National Intellectual Property Administration on December 30, 2021 and entitled "COMMUNICATION METHOD AND APPARATUS", which is incorporated herein by reference in its entirety.

### TECHNICAL FIELD

Embodiments of this application relate to the communication field, and more specifically, to a communication method and apparatus.

### BACKGROUND

A user plane function (user plane function, UPF), which is a user plane service function network element, processes all user plane service data. A network location and functions of the user plane function enable the user plane function to naturally have service control and information extraction capabilities. Therefore, in addition to a network function (such as service information subscription) defined in the 3^{rd} generation partnership project (3^{rd} generation partnership project, 3GPP), various solutions proposed for network improvement accordingly extend a large quantity of UPF-oriented value-added service requirements. In this case, the UPF needs to process a large quantity of data packets and packet processing policies, and this greatly increases power consumption of the UPF.

### SUMMARY

Embodiments of this application provide a communication method and apparatus, to simplify a data plane network function network element and improve communication efficiency.

According to a first aspect, a communication method is provided, including:
A first network function network element receives first information from a second network function network element, where the first information is used to request to subscribe to first data. The first network function network element sends second information to a third network function network element based on the first information, where the second information indicates the third network function network element to produce the first data. The first network function network element sends third information to the third network function network element based on the first information, where the third information indicates to send the first data to the second network function network element, and the third information includes a routing address of the second network function network element.

In the foregoing solution, the first network function network element performs centralized scheduling based on a subscription requirement of the second network function network element and a capability of the third network function network element, and the first network function network element indicates the third network function network element to send the first data to the second network function network element. This avoids a case in which the third network function network element sends the first data to the first network function network element, and then the first network function network element sends the first data to the second network function network element, so that communication efficiency is improved.

With reference to the first aspect, in some implementations of the first aspect, the first data includes at least one type of the following data: service information, a data packet, or a control policy.

In the foregoing solution, a plurality of types of data, such as the service information, the data packet, and the control policy, are summarized in a unified framework and service logic, to avoid a case in which a same type of data is transmitted between different network function network elements, or different interface mechanisms need to be customized for transmitting different types of data between different network function network elements. This simplifies a data plane network function network element.

With reference to the first aspect, in some implementations of the first aspect, the first information includes an identifier of the first data and a first condition, and the first information indicates to request, when the first condition is met, to subscribe to the first data.

That the first network function network element sends the second information and the third information to the third network function network element based on the first information includes:
The first network function network element determines that the first condition is met, and the first network function network element sends the second information and the third information to the third network function network element.

With reference to the first aspect, in some implementations of the first aspect, the first condition indicates that second data meets a second condition, and that the first network function network element determines that the first condition is met includes:
The first network function network element determines that the second data meets the second condition.

In the foregoing solution, the first network function network element filters a subscription request, and then drives a producer network function network element to perform on-demand production after the condition is met. This avoids unnecessary sending and production, and improves the communication efficiency.

With reference to the first aspect, in some implementations of the first aspect, the method further includes:
The first network function network element sends eighth information to a fifth network function network element based on the first condition, where the eighth information indicates the fifth network function network element to produce the second data.

The first network function network element receives the second data from the fifth network function network element.

With reference to the first aspect, in some implementations of the first aspect, the method further includes:
The first network function network element receives fourth information from a fourth network function network element, where the fourth information is used to request to subscribe to the first data.

The first network function network element sends fifth information and sixth information to the third network function network element based on the fourth information, where the fifth information indicates to send the first data to the fourth network function network element, the fifth information includes a routing address of the fourth network function network element, and the sixth information indicates a sequence of sending the first data to the second network function network element and the fourth network function network element.

In the foregoing solution, when a plurality of subscriber network function network elements subscribe to same data information, data is sent to all the subscriber network function network elements by using a concatenation mechanism, so that a case in which the same data information is copied for a plurality of times and then separately sent to the subscriber network function network element is reduced, and system power consumption is reduced.

With reference to the first aspect, in some implementations of the first aspect, that the first network function network element sends the second information to the third network function network element based on the first information includes:
The first network function network element sends the second information to the third network function network element based on the first information and the fourth information.

With reference to the first aspect, in some implementations of the first aspect, the method further includes:
The first network function network element receives seventh information from the third network function network element, where the seventh information indicates that the third network function network element can provide the first data.

With reference to the first aspect, in some implementations of the first aspect, the method further includes:
The first network function network element receives the eighth information from the fifth network function network element, where the eighth information indicates that the fifth network function network element can provide the second data.

With reference to the first aspect, in some implementations of the first aspect, formats of messages that carry the first data, the first information, the second information, the third information, the fourth information, the fifth information, the sixth information, the seventh information, and the eighth information are consistent.

According to a second aspect, a communication method is provided, including:
A third network function network element receives second information from a first network function network element, where the second information indicates the third network function network element to produce first data.

The third network function network element produces the first data based on the second information.

The third network function network element receives third information from the first network function network element, where the third information indicates to send the first data to a second network function network element, and the third information includes a routing address of the second network function network element.

The third network function network element sends the first data to the second network function network element based on the third information.

In the foregoing solution, the first network function network element performs centralized scheduling based on a subscription requirement of the second network function network element and a capability of the third network function network element, and the first network function network element indicates the third network function network element to send the first data to the second network function network element. This avoids a case in which the third network function network element sends the first data to the first network function network element, and then the first network function network element sends the first data to the second network function network element, so that communication efficiency is improved.

With reference to the second aspect, in some implementations of the second aspect, the first data includes at least one type of the following data: service information, a data packet, or a control policy.

In the foregoing solution, a plurality of types of data, such as the service information, the data packet, and the control policy, are summarized in a unified framework and service logic, to avoid a case in which a same type of data is transmitted between different network function network elements, or different interface mechanisms need to be customized for transmitting different types of data between different network function network elements. This simplifies a data plane network function network element.

With reference to the second aspect, in some implementations of the second aspect, the method further includes:
The third network function network element sends seventh information to the first network function network element, where the seventh information indicates that the third network function network element can provide the first data.

With reference to the second aspect, in some implementations of the second aspect, the method further includes:
The third network function network element receives fifth information and sixth information from the first network function network element, where the fifth information indicates to send the first data to a fourth network function network element, the fifth information includes a routing address of the fourth network function network element, and the sixth information indicates a sequence of sending the first data to the second network function network element and the fourth network function network element, where the sequence of sending the first data is that the first data is sent to the second network function network element first and then to the fourth network function network element.

The third network function network element sends ninth information to the second network function network element based on the sixth information, where the ninth information includes the routing address of the fourth network function network element, and the ninth information indicates to send the first data to the fourth network function network element.

In the foregoing solution, when a plurality of subscriber network function network elements subscribe to same data information, data is sent to all the subscriber network function network elements by using a concatenation mechanism, so that a case in which the same data information is copied for a plurality of times and then separately sent to the subscriber network function network element is reduced, and system power consumption is reduced.

With reference to the second aspect, in some implementations of the second aspect, formats of messages that carry the first data, the second information, the third information, the fifth information, the sixth information, the seventh information, and the ninth information are consistent.

According to a third aspect, a communication method is provided, including:
A second network function network element sends first information to a first network function network element, where the first information is used to request to subscribe to first data. The second network function network element receives the first data from a third network function network element.

In the foregoing solution, the first network function network element performs centralized scheduling based on a subscription requirement of the second network function network element and a capability of the third network function network element, and the first network function network element indicates the third network function network element to send the first data to the second network function network element. This avoids a case in which the third network function network element sends the first data to the first network function network element, and then the first network function network element sends the first data to the second network function network element, so that communication efficiency is improved.

With reference to the third aspect, in some implementations of the third aspect, the first data includes at least one type of the following data: service information, a data packet, or a control policy.

In the foregoing solution, a plurality of types of data, such as the service information, the data packet, and the control policy, are summarized in a unified framework and service logic, to avoid a case in which a same type of data is transmitted between different network function network elements, or different interface mechanisms need to be customized for transmitting different types of data between different network function network elements. This simplifies a data plane network function network element.

With reference to the third aspect, in some implementations of the third aspect, the first information includes an identifier of the first data and a first condition, and the first information indicates to request, when the first condition is met, to subscribe to the first data.

With reference to the third aspect, in some implementations of the third aspect, the method further includes:
The second network function network element receives ninth information from the third network function network element, where the ninth information includes a routing address of a fourth network function network element, and the ninth information indicates to send the first data to the fourth network function network element.

The second network function network element sends the first data to the fourth network function network element based on the ninth information.

With reference to the third aspect, in some implementations of the third aspect, formats of messages that carry the first data, the first information, and the ninth information are consistent.

According to a fourth aspect, a communication apparatus is provided, including:
a transceiver module, configured to receive first information from a second network function network element, where the first information is used to request to subscribe to first data.

The transceiver module is further configured to send second information to a third network function network element based on the first information, where the second information indicates the third network function network element to produce the first data.

The transceiver module is further configured to send third information to the third network function network element based on the first information, where the third information indicates to send the first data to the second network function network element, and the third information includes a routing address of the second network function network element.

In the foregoing solution, a first network function network element performs centralized scheduling based on a subscription requirement of the second network function network element and a capability of the third network function network element, and the first network function network element indicates the third network function network element to send the first data to the second network function network element. This avoids a case in which the third network function network element sends the first data to the first network function network element, and then the first network function network element sends the first data to the second network function network element, so that communication efficiency is improved.

With reference to the fourth aspect, in some implementations of the fourth aspect, the first data includes at least one type of the following data: service information, a data packet, or a control policy.

With reference to the fourth aspect, in some implementations of the fourth aspect, the first information includes an identifier of the first data and a first condition, and the first information indicates to request, when the first condition is met, to subscribe to the first data. The apparatus further includes:
a processing module, configured to determine that the first condition is met; and
the transceiver module, specifically configured to send the second information and the third information to the third network function network element.

With reference to the fourth aspect, in some implementations of the fourth aspect, the first condition indicates that second data meets a second condition, and
the processing module is further configured to determine that the second data meets the second condition.

With reference to the fourth aspect, in some implementations of the fourth aspect, the transceiver module is further configured to send eighth information to a fifth network function network element based on the first condition, where the eighth information indicates the fifth network function network element to produce the second data.

The transceiver module is further configured to receive the second data from the fifth network function network element.

With reference to the fourth aspect, in some implementations of the fourth aspect, the transceiver module is further configured to receive fourth information from a fourth network function network element, where the fourth information is used to request to subscribe to the first data.

The transceiver module is further configured to send fifth information and sixth information to the third network function network element based on the fourth information, where the fifth information indicates to send the first data to the fourth network function network element, the fifth information includes a routing address of the fourth network function network element, and the sixth information indicates a sequence of sending the first data to the second network function network element and the fourth network function network element.

With reference to the fourth aspect, in some implementations of the fourth aspect, the transceiver module is specifically configured to send the second information to the third network function network element based on the first information and the fourth information.

With reference to the fourth aspect, in some implementations of the fourth aspect, the transceiver module is further configured to receive seventh information from the third network function network element, where the seventh information indicates that the third network function network element can provide the first data.

With reference to the fourth aspect, in some implementations of the fourth aspect, the transceiver module is further configured to receive the eighth information from the fifth network function network element, where the eighth information indicates that the fifth network function network element can provide the second data.

With reference to the fourth aspect, in some implementations of the fourth aspect, formats of messages that carry the first data, the first information, the second information, the third information, the fourth information, the fifth information, the sixth information, the seventh information, and the eighth information are consistent.

According to a fifth aspect, a communication apparatus is provided, including:
a transceiver module, configured to receive second information from a first network function network element, where the second information indicates a third network function network element to produce first data; and
a processing module, configured to produce the first data based on the second information.

The transceiver module is further configured to receive third information from the first network function network element, where the third information indicates to send the first data to a second network function network element, and the third information includes a routing address of the second network function network element.

The transceiver module is further configured to send the first data to the second network function network element based on the third information.

In the foregoing solution, the first network function network element performs centralized scheduling based on a subscription requirement of the second network function network element and a capability of the third network function network element, and the first network function network element indicates the third network function network element to send the first data to the second network function network element. This avoids a case in which the third network function network element sends the first data to the first network function network element, and then the first network function network element sends the first data to the second network function network element, so that communication efficiency is improved.

With reference to the fifth aspect, in some implementations of the fifth aspect, the first data includes at least one type of the following data: service information, a data packet, or a control policy.

With reference to the fifth aspect, in some implementations of the fifth aspect, the transceiver module is further configured to send seventh information to the first network function network element, where the seventh information indicates that the third network function network element can provide the first data.

With reference to the fifth aspect, in some implementations of the fifth aspect, the transceiver module is further configured to receive fifth information and sixth information from the first network function network element, where the fifth information indicates to send the first data to a fourth network function network element, the fifth information includes a routing address of the fourth network function network element, and the sixth information indicates a sequence of sending the first data to the second network function network element and the fourth network function network element, where the sequence of sending the first data is that the first data is sent to the second network function network element first and then to the fourth network function network element.

The transceiver module is further configured to send ninth information to the second network function network element based on the sixth information, where the ninth information includes the routing address of the fourth network function network element, and the ninth information indicates to send the first data to the fourth network function network element.

With reference to the fifth aspect, in some implementations of the fifth aspect, formats of messages that carry the first data, the second information, the third information, the fifth information, the sixth information, the seventh information, and the ninth information are consistent.

According to a sixth aspect, a communication apparatus is provided, including:
a transceiver module, configured to send first information to a first network function network element, where the first information is used to request to subscribe to first data.

The transceiver module is further configured to receive the first data from a third network function network element.

In the foregoing solution, the first network function network element performs centralized scheduling based on a subscription requirement of a second network function network element and a capability of the third network function network element, and the first network function network element indicates the third network function network element to send the first data to the second network function network element. This avoids a case in which the third network function network element sends the first data to the first network function network element, and then the first network function network element sends the first data to the second network function network element, so that communication efficiency is improved.

With reference to the sixth aspect, in some implementations of the sixth aspect, the first data includes at least one type of the following data: service information, a data packet, or a control policy.

With reference to the sixth aspect, in some implementations of the sixth aspect, the first information includes an identifier of the first data and a first condition, and the first information indicates to request, when the first condition is met, to subscribe to the first data.

With reference to the sixth aspect, in some implementations of the sixth aspect, the transceiver module is further configured to receive ninth information from the third network function network element, where the ninth information includes a routing address of a fourth network function network element, and the ninth information indicates to send the first data to the fourth network function network element.

The transceiver module is further configured to send the first data to the fourth network function network element based on the ninth information.

With reference to the sixth aspect, in some implementations of the sixth aspect, formats of messages that carry the first data, the first information, and the ninth information are consistent.

According to a seventh aspect, a communication apparatus is provided, including:
a processor and a memory, where
the memory is configured to store a computer program, and
the processor is configured to execute the computer program stored in the memory, to enable the communication apparatus to perform the communication method according to any one of the first aspect to the third aspect.

According to an eighth aspect, a computer-readable storage medium is provided, where the computer-readable storage medium stores instructions. When the computer instructions are run on a computer, the computer is enabled to perform the method according to any one of the first aspect to the third aspect.

According to a ninth aspect, a chip is provided, including:
a memory, configured to store a computer program, and
a processor, configured to read and execute the computer program stored in the memory, where when the computer program is executed, the processor performs the method according to any one of the first aspect to the third aspect.

According to a tenth aspect, a computer program product is provided, where the computer program product includes computer program code. When the computer program code is run on a computer, the computer is enabled to perform the method according to any one of the first aspect to the third aspect.

### BRIEF DESCRIPTION OF DRAWINGS

FIG. 1 is a schematic diagram of an example of a scenario in which a UPF interacts with another network function (network function, NF);
FIG. 2 is a schematic diagram of a capability registration mechanism of a data plane capability center according to this application;
FIG. 3 is a schematic diagram of a subscription mechanism of a data plane capability center according to this application;
FIG. 4 is a schematic diagram of production-driven and data concatenation mechanisms of a data plane capability center according to this application;
FIG. 5 shows a network architecture according to this application;
FIG. 6 is a schematic diagram of a communication method 100 according to this application;
FIG. 7 is a schematic diagram of a communication method 200 according to this application;
FIG. 8 is a schematic block diagram of an uplink transmission communication apparatus according to an embodiment of this application; and
FIG. 9 is a schematic diagram of an uplink transmission apparatus 20 according to an embodiment of this application.

### DESCRIPTION OF EMBODIMENTS

The following describes technical solutions of embodiments in this application with reference to accompanying drawings.

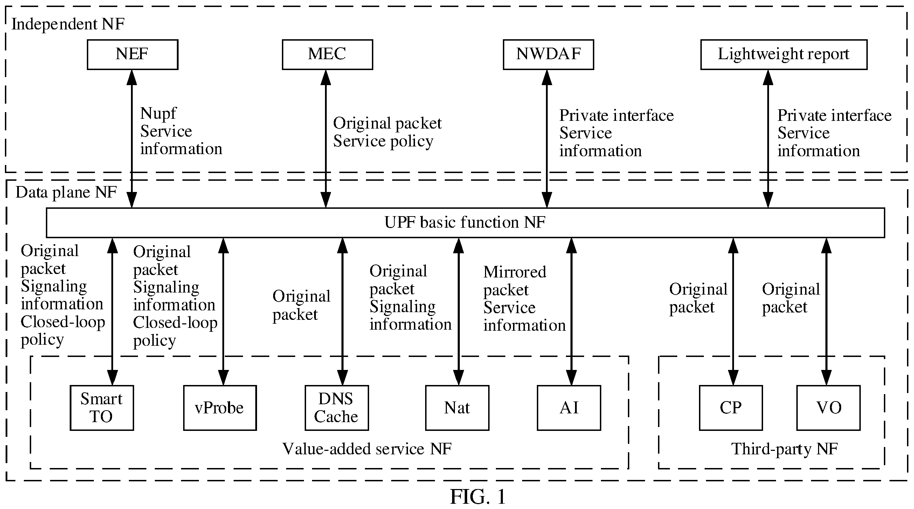

The following describes a scenario in which a UPF interacts with another network function (network function, NF) with reference to FIG. 1.

For ease of understanding of the scenario, the following first describes some related technical terms in FIG. 1.
1. A network capability exposure function (network exposure function, NEF) is responsible for exposing network capability information to a third-party functional entity.
2. Multi-access edge computing (multi-access edge computing, MEC) provides cloud computing capabilities and an IT service environment at a network edge for application developers and content providers.
3. A network data analysis function (network data analysis function, NWDAF) is responsible for intelligently analyzing a network status and other data.
4. A lightweight report has functions similar to those of the NWDAF. A difference is that the NWDAF is an independent network element and can interconnect with a plurality of core network devices. The lightweight report may function as a small-scale NWDAF, and interconnects only to an adjacent UPF device. The lightweight report is built in a UPF and functions as an NF built in the UPF.
5. A user plane function (user plane function, UPF) is responsible for user data forwarding, quality of service (quality of service, QoS) enforcement, charging statistics collection, and the like.
6. Smart transmission control protocol optimization (smart transmission control protocol optimization, smart TO) automatically formats information flows and provides reliable transmission.
7. A virtual probe function (software probe function) (virtual probe, vProbe) mainly analyzes service packets flowing through a network device. For example, a proportion of iQIYI service traffic on the UPF can be perceived.
8. Domain name resolution protocol cache (domain name server cache, DNS cache) is a cache mechanism introduced for improving query efficiency of DNS query. The DNS cache means that after a DNS returns a correct IP address, a system temporarily stores the result. In addition, an expiration time (for example, N hours) is set for the cache. When a user accesses a website again within the N hours, the system directly returns, to the user, the result from the local DNS cache of the user's computer without querying the DNS server. This disguisedly "accelerates" website resolution.
9. Network address translation (network address translation, Nat) can not only solve the problem of insufficiency of IP addresses, but also effectively prevent attacks from outside the network and hide and protect computers inside the network.
10. Artificial intelligence (artificial intelligence, AI) is used to research and develop theories, methods, technologies, and application systems for simulating, extending, and extending human intelligence.
11. A central processor (central processor, CP) of a wireless communication device is a mobile data service content provider or a mobile value-added service content provider.
12. Video optimization (video optimization, VO) is a device that accelerates a specific video service.
13. Network function (network function, NF)

FIG. 1 is an architectural diagram of interaction between a UPF and other NFs.

FIG. 1 includes a plurality of NFs, which are mainly classified into two types: independent NFs and data plane NFs. The data plane NFs include a UPF basic function NF, a value-added service NF, and a third-party NF.

Network elements in the independent NFs essentially have same requirements on the UPF. The UPF, which functions as a producer, sends data that meets a specific condition to a consumer (independent NF). Currently, the UPF interconnects with the NEF through Nupf, interconnects with the MEC through Mp2, and interconnects with the NWDAF through a private interface. Completely different mechanisms for external subscription receiving and data sending are used between the UPF and network elements in the independent NF, that is, corresponding mechanisms are customized depending on different network elements. For example, assuming that the UPF subscribes to service information from the NEF, the UPF sends subscription information only through an Nupf interface between the UPF and the NEF, and then receives the service information from the NEF through the Nupf interface.

The value-added service NF and the third-party NF communicate with the independent NF via the UPF basic function NF. The value-added service NF and the third-party NF may be deployed together with the UPF or may be separately deployed.

When the UPF performs similar subscription receiving and data sending, the UPF needs to receive the subscribed data and then send the data to a subscriber. For example, the AI in the value-added service NF subscribes to a service policy of the MEC from the UPF, and the UPF notifies the MEC to produce the service policy. After producing the service policy, the MEC sends the service policy to the UPF, and the UPF sends the service policy to the AI. Particularly, if a plurality of subscriber NFs need to subscribe to same data, a producer NF needs to make a plurality of copies of the data and send the copies to the UPF. Then, the UPF sends the copies to each subscriber NF.

In addition, the UPF processes all user plane service data. A network location and functions of the UPF enable the UPF to naturally have service control and information extraction capabilities. Therefore, in addition to a network function (such as service information subscription) defined in the 3GPP, various solutions proposed for network improvement accordingly extend a large quantity of UPF-oriented value-added service requirements. In this case, the UPF needs to process a large quantity of data packets and packet processing policies, and this greatly increases power consumption of the UPF.

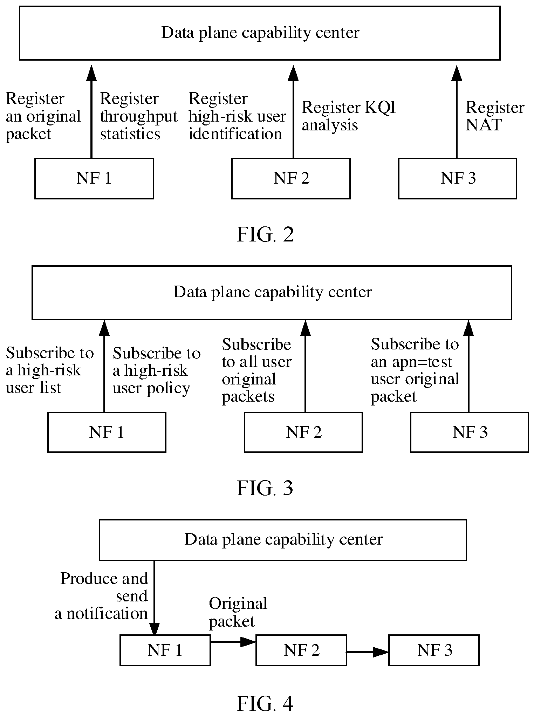

The foregoing describes the scenario in which the UPF interacts with the another NF with reference to FIG. 1. The following describes logical entities of a data plane capability center provided in this application with reference to FIG. 2 to FIG. 4.

The logical entities of the data plane capability center provided in this application have at least one of the following functions: capability registration, subscription, policy matching, production driving, and data concatenation. In other words, each of the following mechanisms may be understood as a sub-function of the data plane capability center.

### 1. Capability registration mechanism

The capability registration mechanism may also be referred to as a capability release mechanism, or may have another name. A definition of a related mechanism name is not limited in this application.

All NFs may release capabilities of the NFs to the data plane capability center in a first format, for capability registration. The first format herein may be understood as a message format. It may be understood that all the NFs are equally use the first format, and may abstract the capabilities of the NFs into content in the first format for release. A capability registered by each NF herein may be understood as a capability of the NF of obtaining data. For example, NF 1 can obtain two pieces of data: an original packet and throughput statistics. A capability registered by NF 1 with the data plane capability center may be understood as a capability of NF 1 of obtaining the original packet and the throughput statistics.

It should be noted that, in the capability registration mechanism provided in this application, content released by the NF to the data plane capability center may be any content that meets the first format and that is negotiated and defined between the NF and the data plane capability center. For example, the content released by the NF is service information, a control policy, a data packet, or the like.

For example, the first format herein may be https://event-center.com/regist?app=NF1&event=E1, indicating that NF 1 needs to register an event whose identifier is E1 with the capability center.

FIG. 2 is a schematic diagram of a capability registration mechanism of a data plane capability center according to this application.

As shown in FIG. 2, in this architecture, NF 1 to NF 3 all equally abstract capabilities of NF 1 to NF 3 into content in a first format and send the content to the data plane capability center. For example, NF 1 registers an original packet and throughput statistics that meet the first format with the data plane capability center, NF 2 registers high-risk user identification and key quality indicator (key quality indicator, KQI) analysis that meet the first format with the data plane capability center, and NF 3 registers network address translation (network address translation, NAT) with the data plane capability center. For example, each capability has a unique identifier, where the identifier may be a number or a name, or may be in another form. When registering with the data plane capability center, an NF may send an identifier of a capability that the NF has. It should be understood that all NFs in a network and the data plane capability center may obtain a correspondence between each capability and an identifier in advance.

### 2. Subscription mechanism

All the NFs may subscribe to, from the data plane capability center based on the first format, a capability released by another NF. Alternatively, more specifically, all the NFs may subscribe to, from the data plane capability center based on the first format and a subscription condition, a capability released by another NF. The NF that subscribes to the capability does not need to know which NF has released the capability or does not need to change a format of a subscription message based on a capability publisher.

FIG. 3 is a schematic diagram of a subscription mechanism of a data plane capability center according to this application.

As shown in FIG. 3, in this architecture, NF 1 to NF 3 all equally subscribe to, from the data plane capability center, a capability registered by another NF with the data plane capability center. For example, NF 1 subscribes to a high-risk user list and a high-risk user policy from the data plane capability center, and NF 1 does not need to pay attention to which NF releases the capability subscribed by NF 1, and only needs to subscribe to the capability from the data plane capability center. Similarly, NF 2 subscribes to all user original packets from the data plane capability center. NF 3 subscribes to an apn=test user original packet from the data plane capability center.

For example, each NF may further subscribe to a capability of another NF by sending a subscription rule to the data plane capability center. For example, NF 3 may further send a subscription rule to the data plane capability center. The subscription rule may carry a condition and data that needs to be carried. The condition and data are from capabilities registered by each NF with the data plane capability center. For example, the subscription rule may be in a form of "condition, data needed if the condition is met". The condition herein may be identified as that a capability meets a threshold, or may be identified as that data meets a condition. For example, E1=1, E1 is a rate identifier, and 1 may be understood as a rate threshold. For another example, E2>10, E2 is a throughput, and 10 may be understood as a throughput threshold. The condition may be understood as that the throughput is greater than 10 Gb/s. For another example, user 1= cell 1 may be understood that user 1 enters cell 1.

### 3. Policy matching mechanism

When the NF sends a subscription rule to the data plane capability center, the data plane capability center needs to determine whether a condition in the subscription rule is met.

### 4. Production-driven mechanism

When the data plane capability center receives a subscription message of NF 1, where the subscription message requests to subscribe to a capability E1, and NF 2 has a capability of producing E1, the data plane capability center sends a production notification to NF 2, to notify NF 2 to produce E1.

Alternatively, when the data plane capability center receives a subscription rule of NF 1, where the subscription rule carries a condition 1 and a subscribed capability E1, after determining, by using the policy matching mechanism, that condition 1 is met, the data plane capability center sends a production notification to NF 2 based on a capability that is reported by NF 2 and that is of producing E1 in the capability registration mechanism, to notify NF 2 to produce E1.

For example, the production notification may include an identifier of E1.

The production-driven mechanism can implement on-demand production of each NF.

### 5. Data concatenation mechanism

Capability data produced by the NF is distributed under the control of the data plane capability center. However, data provided by the producer NF is not sent to the subscriber NF through the data plane capability center. Instead, the producer NF directly sends the data to the subscriber NF. Under scheduling of the data plane capability center, each NF independently routes and forwards data through a unified interface, and the NFs are unaware of each other. The data plane capability center sends a routing address of the subscriber NF to the producer NF, but the producer NF is not aware of how the NF corresponding to the routing address processes the data.

If a plurality of NFs subscribe to the same data from the data plane capability center (including directly subscribing to the data or subscribing to the data by using a subscription rule and meeting a condition in the subscription rule), the producer NF needs to publish only one copy of the data, and the data does not need to be sent to the data plane capability center and then sent to the subscriber NF by the data plane capability center. Instead, the producer NF sends the data in sequence based on a receiving address and a sending sequence sent by the data plane capability center. In this way, data concatenation of the plurality of NFs is implemented.

Similarly, it is assumed that there are two subscriber NFs: subscriber NF 1 and subscriber NF 2. The producer NF first sends data to subscriber NF 1, and sends a routing address of subscriber NF 2 to subscriber NF 1. In this case, when sending the data to subscriber NF 2 based on the routing address, subscriber NF 1 is not aware of how subscriber NF 2 processes the data.

FIG. 4 is a schematic diagram of production-driven and data concatenation mechanisms of a data plane capability center according to this application.

For example, the data plane capability center sends a production notification and a sending notification to NF 1, where the production notification is used to notify NF 1 to produce an original packet, and the sending notification is used to notify NF 1 that receiving addresses of the original packet are NF 2 and NF 3, and a sending sequence is that the original packet is first sent to NF 2 and then sent to NF 3. NF 1 sends the original packet to NF 2 based on the receiving addresses and the sending sequence, and notifies NF 2 that a next-hop receiving address of the original packet is NF 3. After receiving the original packet, NF 2 sends the original packet to NF 3. In the above, an operation of a set of production-driven and data concatenation mechanisms is implemented.

It should be noted that, in the foregoing capability registration, subscription, policy matching, production-driven, and data concatenation mechanisms, data is sent and received between all the NFs and the data plane capability center based on the first format.

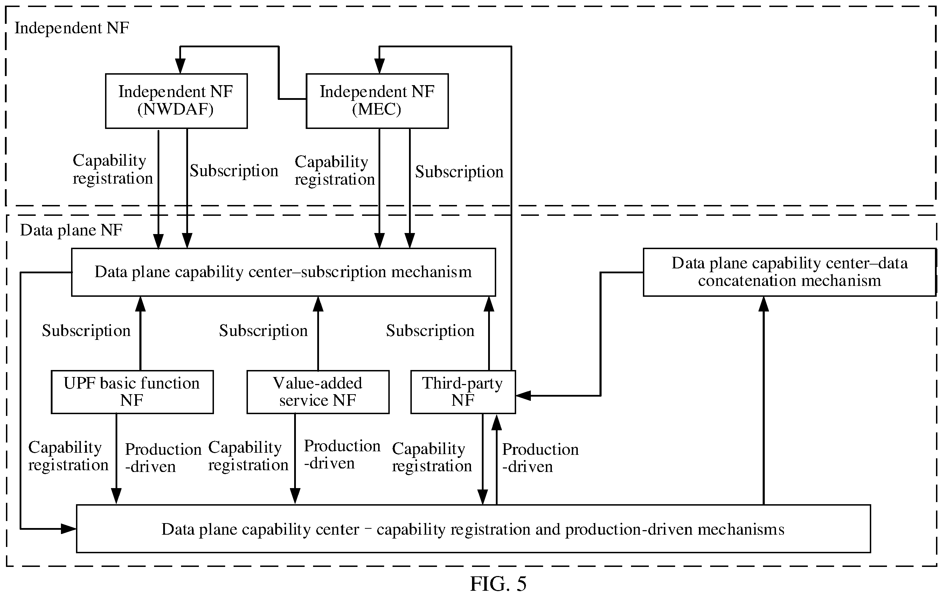

The foregoing describes a plurality of mechanisms of the data plane capability center. With reference to FIG. 5, the following describes a schematic diagram of an example of a network architecture in which the data plane capability center is deployed on a 5GC user plane.

FIG. 5 shows a network architecture according to this application.

A UPF basic function NF, a value-added service NF, a third-party NF, an NWDAF, and MEC in FIG. 5 all correspond to corresponding network elements in FIG. 1. The architecture includes the data plane capability center proposed in this application. The subscription mechanism, the capability registration and production-driven mechanisms, and the data concatenation mechanism are sub-functions of the data plane capability center. It should be noted that, in the figure, all blocks indicating the data plane capability center and the sub-functions thereof belong to a logical concept, and do not represent an entity apparatus. Locations of the blocks do not imply that the sub-functions need to be separately deployed.

The data plane capability center may be deployed together with one or more NFs or separately deployed.

In integrated deployment, in a manner, the data plane capability center may be deployed in all NFs in a network. A data plane capability center in each NF may send a capability of the NF to a data plane capability center in another NF in the network, and subscription may be directly initiated between different NFs based on a registered capability. For example, if a data plane capability center in NF 1 knows capabilities of all the NFs in the network, NF 1 may directly initiate subscription to NF 2 that has a capability needed by NF 1. Specifically, NF 1 initiates the subscription to a data plane capability center in NF 2. This manner may be understood as a decentralized implementation. In another manner, the data plane capability center is deployed in an NF, for example, deployed in a UPF. In this manner, it may be understood that a function of the UPF is enhanced, so that the UPF has a function of the data plane capability center.

In separate deployment, the data plane capability center functions as an independent network element and interacts with all NFs in the network.

A deployment manner of the data plane capability center is not limited in this application.

The following uses the independent deployment of the data plane capability center as an example to describe data subscription, production, and transfer processes in this architecture.

In the architecture, all NFs are in equal positions, and all information exchanged between the NFs and the data plane capability center needs to meet the first format. For example, the NWDAF and the MEC have no difference in interface and information transmission format for the data plane capability center.

The UPF basic function NF, the value-added service NF, the third-party NF, and the independent NF register their capabilities with the data plane capability center. The UPF basic function NF, the value-added service NF, the third-party NF, and the independent NF subscribe to data of another NF from the data plane capability center. After processing a subscription request, the data plane capability center uses, based on data needed by each NF, the production-driven mechanism to notify the UPF basic NF, the value-added service NF, and the third-party NF to perform on-demand production. For example, if an independent NF subscribes to a capability of the third-party NF, the third-party NF is notified, by using the concatenation mechanism, that the capability needs to be sent to two independent NFs, and a sending sequence and routing addresses of the two independent NFs are notified. The third-party NF sends data to the MEC, and the MEC sends the data to the NWDAF.

It should be understood that the architecture may provide a service closed-loop control capability.

In an example, the UPF basic function NF registers, with the data plane capability center, a capability of providing throughput, traffic, and cell information, and the NWDAF registers, with the data plane capability center, a capability of providing information about a congested cell and a control policy. The NWDAF subscribes to the throughput, the traffic, and the cell information from the data plane capability center. The data plane capability center indicates the UPF basic function NF to produce data such as the throughput, the traffic, and the cell information, and indicates a receiving address of the data, that is, a routing address of the NWDAF. The UPF subsequently sends the data to the NWDAF based on the routing address. It should be understood that the NWDAF may determine, based on the data such as the throughput, the traffic, and the cell information, which cell is congested, and then provides the information about the congested cell and the control policy. The UPF basic function NF subscribes to the information about the congested cell and the control policy from the data plane capability center. The data plane capability center indicates the NWDAF to produce the information about the congested cell and the control policy, and then sends the data to the UPF basic function NF. The UPF may determine the congested cell based on the information about the congested cell, and mitigate a congestion status of the congested cell according to the control policy. The foregoing forms service closed-loop control.

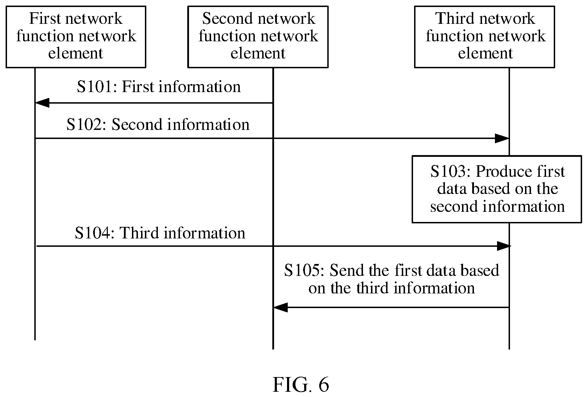

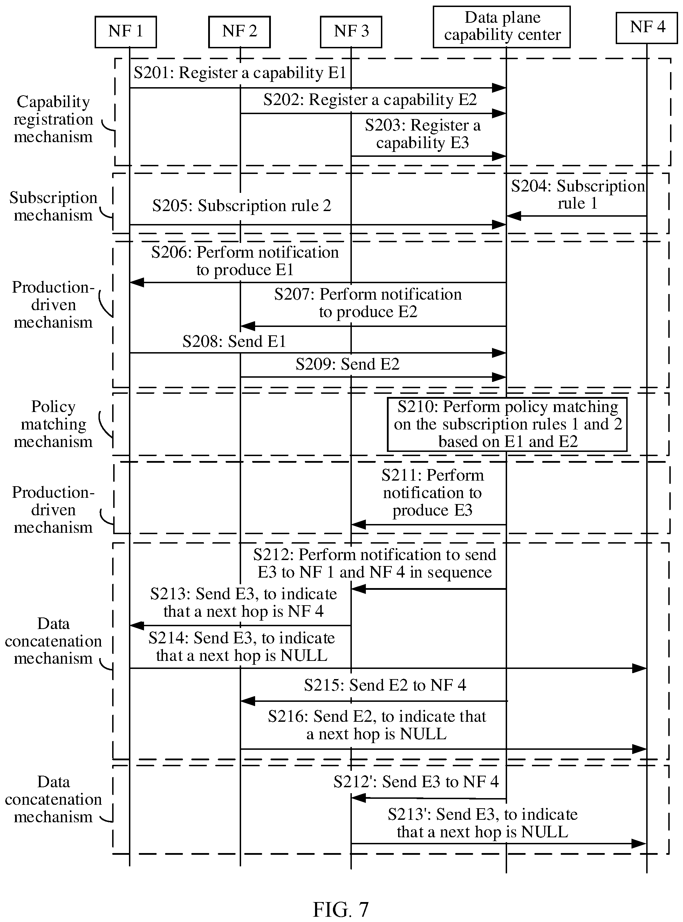

The foregoing describes the function network elements of the data plane capability center provided in this application and how corresponding mechanisms operate. The following describes in detail a communication method provided in this application with reference to FIG. 6 and FIG. 7.

FIG. 6 is a schematic diagram of a communication method 100 according to this application.

Before the communication method 100 is described, network function network elements in the communication method 100 are first briefly described. A first network function network element may be a centrally deployed data plane capability center, or may be a network element in which a data plane capability center is deployed. A second network function network element, a third network function network element, and a fourth network function network element may be network elements in which a data plane capability center is deployed, or may be network elements in which no data plane capability center is deployed.

S101: The second network function network element sends first information to the first network function network element, and correspondingly, the first network function network element receives the first information from the second network function network element, where the first information is used to request to subscribe to first data.

It should be understood that the first data herein may be any content that meets a first format and that is defined through negotiation between a network function network element and a data plane capability center. For example, the first data is service information, a control policy, a data packet, or the like.

For example, the first information includes an identifier of the first data. The identifier of the first data herein may be a name or a number of the first data. For example, the name of the first data may be E1, and the number of the first data may be 00001. To help the first network function network element (where the first network function network element is a separately deployed data plane capability center) or the data plane capability center deployed in the first network function network element manage a network function network element in a network in a unified manner, the identifier of the first data is unique.

S102: The first network function network element sends second information to the third network function network element based on the first information, and correspondingly, the third network function network element receives the second information from the first network function network element.

The second information indicates the third network function network element to produce the first data.

For example, the second information may include the identifier of the first data.

It should be understood that the third network function network element has a capability of producing the first data. For example, the first network function network element obtains seventh information. The seventh information indicates that the third network function network element has the capability of producing the first data, in other words, the third network function network element can provide the first data. There are a plurality of manners in which the first network function network element obtains the seventh information. For example, the third network function network element sends the seventh information to the first network function network element, and correspondingly, the first network function network element receives the seventh information from the third network function network element. Alternatively, the first network function network element pre-configures the seventh information. Alternatively, another manner may be used. This is not limited in this application.

S103: The third network function network element produces the first data based on the second information.

It should be understood that the third network function network element performs on-demand production, so that unnecessary production can be avoided, and power consumption can be reduced.

For example, the third network function network element determines, based on the identifier that is of the first data and that is included in the second information, that the first data needs to be produced.

S104: The first network function network element sends third information to the third network function network element based on the first information, and correspondingly, the third network function network element receives the third information from the first network function network element.

The third information indicates to send the first data to the second network function network element, and the third information includes a routing address of the second network function network element.

For example, the third information may further include the identifier of the first data.

For example, the second information and the third information may be carried in one message, or may be carried in different messages. This is not limited in this application.

It should be noted that S103 may be performed before or after S104, and a step number in the method 100 in this application is not limited thereto.

S105: The third network function network element sends the first data to the second network function network element based on the third information, and correspondingly, the second network function network element receives the first data from the third network function network element.

It should be understood that the first network function network element sends the routing address of the second network function network element to the third network function network element, so that the third network function network element sends the first data based on the routing address. The third network function network element does not perceive that the routing address is of the second network function network element, and does not perceive how the second network function network element processes the first data after receiving the first data.

For example, formats of messages that carry the first information to the third information and the first data are consistent. For the formats, refer to the foregoing descriptions of the first format.

It may be understood that, according to the communication method provided in this application, a plurality of types of data, such as the service information, the data packet, and the control policy, can be summarized in a unified framework and service logic, to avoid a case in which a same type of data is transmitted between different network function network elements, or different interface mechanisms need to be customized for transmitting different types of data between different network function network elements. This simplifies a data plane network function network element, facilitates data transmission between network elements, and improves communication efficiency. In addition, the first network function network element performs centralized scheduling based on a subscription requirement of the second network function network element and a capability of the third network function network element, and the first network function network element indicates the third network function network element to send the first data to the second network function network element. This avoids a case in which the third network function network element sends the first data to the first network function network element, and then the first network function network element sends the first data to the second network function network element, so that the communication efficiency is improved.

Optionally, the method 100 may further include a case in which a plurality of network function network elements request to subscribe to the first data. The plurality of network function network elements include the second network function network element. The following describes a solution corresponding to this case with reference to step 1 to step 4.

Step 1: The fourth network function network element sends fourth information to the first network function network element, and correspondingly, the first network function network element receives the fourth information from the fourth network function network element, where the fourth information is used to request to subscribe to the first data.

It should be understood that, in addition to the second network function network element, the fourth network function network element also requests to subscribe to the first data. For example, the first network function network element herein may be one or more network function network elements.

It should be understood that the plurality of network function network elements request to subscribe to the first data.

Example 1: After receiving a plurality of pieces of information for requesting to subscribe to the first data, the first network function network element may uniformly send the second information to the third network function network element. In this case, in S102, that the first network function network element sends the second information to the third network function network element based on the first information may be that the first network function network element sends the second information to the third network function network element based on the first information and the fourth information.

Example 2: After each time of receiving information for requesting to subscribe to the first data, the first network function network element may send the second information to the third network function network element. In this case, the method 100 further includes: The first network function network element sends the second information to the third network function network element based on the fourth information.

In conclusion, in Example 1, a centralized scheduling capability of the first network function network element can be better reflected, and consumption of the entire network is reduced. In Example 2, data is fed back to the second network function network element and the fourth network function network element in a timelier manner.

Step 2: The first network function network element sends fifth information to the third network function network element based on the fourth information, and correspondingly, the third network function network element receives the fifth information from the first network function network element.

The fifth information indicates to send the first data to the fourth network function network element, and the fifth information includes a routing address of the fourth network function network element.

The fifth information and the third information may be carried in one message for sending, or may be separately sent.

### Example 1

The third information and the fifth information are separately sent, and the third network function network element separately performs S105 and step 3-1.

Step 3-1: The third network function network element sends the first data to the fourth network function network element based on the fifth information, and correspondingly, the fourth network function network element receives the first data from the third network function network element.

It should be understood that a sequence of sending the third information and the fifth information and a sequence of performing step S105 and step 3-1 are not limited in this application.

### Example 2

The fifth information and the third information are carried in one message, for example, a first message, for sending. Alternatively, the third information and the fifth information are separately sent, and the first network function network element centrally processes the third information and the fifth information.

It should be understood that the third network function network element may determine a sequence of separately sending the first data to the second network function network element and the fourth network function network element, and send the first data and a routing address of a lower-ranking network function network element to a higher-ranking network function network element.

There may be a plurality of manners in which the third network function network element determines the sequence of sending the first data. For example, the first message may include sixth information. The sixth information indicates the sequence of sending the first data to the second network function network element and the fourth network function network element (for example, indicate a priority of sending the first data to the second network function network element and the fourth network function network element). Alternatively, in addition to the first message, the third network function network element may receive sixth information from the first network function network element. The third network function network element determines, based on the sixth information, the sequence of sending the first data. For another example, the third network function network element may alternatively determine, based on a sequence of receiving the third information and the fifth information, the sequence of sending the first data. For another example, the third network function network element may alternatively determine, based on an arrangement sequence of fields that are in the first message and that carry the third information and the fifth information, the sequence of sending the first data.

The following describes step 3 and step 4 by using an example in which the first data is first sent to the second network function network element, and then sent to the fourth network function network element.

Step 3: The third network function network element sends the first data and ninth information to the second network function network element, and correspondingly, the second network function network element receives the first data and the ninth information from the third network function network element. The ninth information includes the routing address of the fourth network function network element, and the ninth information indicates to send the first data to the fourth network function network element.

Step 4: The second network function network element sends the first data to the fourth network function network element based on the ninth information.

In an example, the fourth network function network element is one network function network element, and the second network function network element may further send one piece of indication information to the fourth network function network element. The indication information indicates that a next-hop routing address is NULL.

In another example, when the fourth network function network element includes a plurality of network function network elements, step 4 is that the second network function network element sends, based on the ninth information, the first data and a routing address of a network function network element other than a network function network element 1 included in the fourth network function network element to the network function network element 1 included in the fourth network function network element. During specific implementation, for details that the second network function network element determines a sequence of sending the first data to the plurality of network function network elements, refer to the manner in which the third network function network element determines the sequence of sending the first data. Similarly, for details that the network function network element 1 determines the sequence of sending the first data to the another network function network element, refer to the manner in which the third network function network element determines the sequence of sending the first data. Details are not described herein again.

It should be understood that when the first data is first sent to the fourth network function network element, and then sent to the second network function network element, specific implementation is similar to that of the foregoing steps 3 and 4. Details are not described herein again.

In the foregoing solution, when a plurality of subscriber network function network elements subscribe to same data information, data is sent to all the subscriber network function network elements by using a concatenation mechanism, so that a case in which the same data information is copied for a plurality of times and then separately sent to the subscriber network function network element is reduced, and system power consumption is reduced.

Optionally, when the first information further includes a first condition, the method 100 may further include a solution in which the first network function network element performs condition filtering on the first information. The following describes the solution corresponding to this case with reference to Manner 1 and Manner 2.

It should be understood that the first information includes the identifier of the first data and the first condition, and the first information indicates to request, when the first condition is met, to subscribe to the first data.

In this case, that the first network function network element sends the second information and the third information to the third network function network element based on the first information may include: The first network function network element sends the second information and the third information to the third network function network element only when determining that the first condition is met.

The first condition herein may be, for example, that time elapsed after the first network function network element receives the first information exceeds first preset duration. For example, a timer is disposed in the first network function network element. When timing duration of the timer exceeds the first preset duration, the first network function network element indicates the third network function network element to send the first data.

Alternatively, the first condition herein indicates that second data meets a second condition. The following describes two different implementations in which the first network function network element determines that the first condition is met.

Manner 1: The second data is the same as the first data.

Step 1: The first network function network element obtains the second data.

For example, the second data may be preconfigured in the first network function network element. For another example, after receiving the second information, the third network function network element sends the second data to the first network function network element. Correspondingly, the first network function network element receives the second data from the third network function network element.

Step 2: The first network function network element determines that the second data meets the second condition. In other words, the first network function network element determines that the first condition is met.

It should be understood that the second data may meet the second condition, or may not meet the second condition. If the second condition is not met, no subsequent step is performed. If the second condition is met, the solution continues.

That the second data meets the second condition may be that, for example, the second data >, =, <, ≥, or ≤ a first threshold. For example, the second condition is represented as E1≥10, and the second condition indicates a user whose throughput is greater than 10 Gb/s. E1 is an identifier of the second data, the second data is the throughput, and 10 indicates that the first threshold is 10 Gb/s.

That the second data meets the second condition may alternatively be that, for example, the second data meets an event. For example, if a user 1 enters a cell 1, the first condition may be represented as the user 1=the cell 1, where the second data is data of the user 1, and the event is that the user 1 enters the cell 1.

Manner 2: The second data is different from the first data.

Step I: The first network function network element obtains the second data.

For example, the second data may be preconfigured in the first network function network element.

For another example, the second data is produced by a fifth network function network element, and is sent to the first network function network element. The fifth network function network element may be the same as or different from the third network function network element. For example, the first network function network element sends eighth information to the fifth network function network element based on the first condition, where the eighth information indicates the fifth network function network element to produce the second data; and the first network function network element receives the second data from the fifth network function network element. Optionally, the eighth information indicates that the fifth network function network element can provide the second data. The eighth information may be sent by the fifth network function network element to the first network function network element, or may be preconfigured in the first network function network element.

Step II: The first network function network element determines that the second data meets the second condition. In other words, the first network function network element determines that the first condition is met.

For details, refer to descriptions of step 2 in Manner 1.

In the foregoing solution, the first network function network element filters a subscription request, and then drives a producer network function network element to perform on-demand production after the condition is met. This avoids unnecessary sending and production, and improves communication efficiency.

FIG. 7 is a schematic diagram of a communication method 200 according to this application.

As shown in FIG. 7, S201 to S203 may be understood as a capability registration mechanism, S204 and S205 may be understood as a subscription mechanism, S206 to S209 and S211 may be understood as a production-driven mechanism, S210 may be understood as a policy matching mechanism, and S212 to S216 or S212' and S213' may be understood as a data concatenation mechanism. S212 to S216 correspond to Case 2 of a policy matching result in S210, and S212' and S213' correspond to Case 3 of the policy matching result in S210.

S201: NF 1 registers a capability E1 with a data plane capability center.

S202: NF 2 registers a capability E2 with the data plane capability center.

S203: NF 3 registers a capability E3 with the data plane capability center.

For example, E1 herein may be traffic, E2 may be throughput, and E3 may be cell information.

In S201 to S203, each NF independently registers, with the data plane capability center, a capability of producing data that can be produced by the NF. The data plane capability center maintains capabilities of NFs in an entire network in a unified manner. For example, to facilitate unified management of the capabilities, each capability may correspond to a unique identifier, and the identifier may be a number and/or a name. In addition, a correspondence between all capabilities and identifiers of the capabilities may be preconfigured for all the NFs in the entire network, so that the data plane capability center performs unified scheduling on all the NFs. For example, the foregoing E1, E2, or E3 is an example of an identifier of a capability. In this application, an example in which E1, E2, E3, or the like is used as an identifier of a capability is used for description. The identifier of the capability may alternatively be in another form. This is not limited in this application.

S204: NF 4 sends a subscription rule 1 to the data plane capability center, where the subscription rule 1 is: If E1=1 or E2=10, E2 and E3 are reported.

For example, 1 herein may be understood as a traffic threshold, and 10 herein may be understood as a throughput threshold. The subscription rule 1 may be understood as reporting the throughput and the cell information when the traffic is equal to the traffic threshold and the throughput is equal to the throughput threshold.

S205: NF 1 sends a subscription rule 2 to the data plane capability center, where the subscription rule 2 is: If E2=10, E3 is reported.

In S204 and S205, each NF independently registers a subscription rule with the data plane capability center, and the subscription rule may include a condition and needed data. The condition and the data in the subscription rule are from the capability registered by each NF with the data plane capability center in S201 to S203. For example, in the subscription rule 1, E1=1 or E2=10 is used as a filter condition, and E2 and E3 are used as needed data after the condition is met. The subscription rule 2 is similar to this, and details are not described herein again.

S206 and S207: The data plane capability center notifies, based on capabilities used in conditions in the subscription rule 1 and the subscription rule 2, related NFs to perform data production.

S206: The data plane capability center sends a notification 1 to NF 1, to notify NF 1 to produce the capability E1. S207: The data plane capability center sends a notification 2 to NF 2, to notify NF 2 to produce the capability E2.

S208: NF 1 sends produced E1 to the data plane capability center.

S209: NF 2 sends produced E2 to the data plane capability center.

S210: The data plane capability center completes policy matching on the subscription rule 1 and the subscription rule 2 based on E1 and E2.

There are three possible policy matching results.

Case 1: Conditions of the subscription rule 1 and the subscription rule 2 are not met (that is, E1≠1 and E2≠10). Subsequent steps are not performed.

Case 2: Conditions of the subscription rule 1 and the subscription rule 2 are met (that is, E1=1 and E2=10). The data plane capability center obtains content in the subscription rule 1 and the subscription rule 2, and performs subsequent S211 to S216 based on the content.

Case 3: The condition of the subscription rule 1 is met, and the condition of the subscription rule 2 is not met (that is, E1=1, E2≠10). The data plane capability center obtains content in the subscription rule 1, and performs subsequent S212' and S213' based on the content.

The following describes S211 to S216 corresponding to Case 2.

S211: The data plane capability center sends a notification 3 to NF 3, to notify NF 3 to produce the capability E3.

S212: The data plane capability center sends a notification 4 to NF 3, to notify NF 3 to send the capability E3 to NF 1 and NF 4 in sequence, where the notification 4 includes receiving addresses of NF 1 and NF 4.

Alternatively, the notification 3 and the notification 4 may be sent in a same piece of information. To be specific, the data plane capability center sends a notification 5 to NF 3, where the notification 5 notifies NF 3 to produce the capability E3 and send the capability E3 to NF 1 and NF 4 in sequence, and the notification 5 includes receiving addresses of NF 1 and NF 4.

S213: NF 3 sends the capability E3 to NF 1, where indication information 1 is carried, and the indication information 1 indicates a next-hop receiving address, that is, the receiving address of NF 4.

S214: NF 1 sends the capability E3 to NF 4 based on the indication information 1, where indication information 2 is carried, and the indication information 2 indicates that a next-hop receiving address is NULL.

S215: The data plane capability center sends a notification 6 to NF 2, to notify NF 2 to send the capability E2 to NF 4, where the notification 6 includes the receiving address of NF 4.

S216: NF 2 sends the capability E2 to NF 4, where indication information 3 is carried, and the indication information 3 indicates that a next-hop receiving address is NULL.

The following describes S211, S212', and S213' corresponding to Case 3.

S211: The data plane capability center sends a notification 3 to NF 3, to notify NF 3 to produce the capability E3.

S212': The data plane capability center sends a notification 7 to NF 3, to notify NF 3 to send E3 to NF 4, where the notification 7 carries the receiving address of NF 4.

Alternatively, the notification 3 and the notification 7 may be sent in a same piece of information. To be specific, the data plane capability center sends a notification 8 to NF 3, where the notification 8 notifies NF 3 to produce the capability E3 and send the capability E3 to NF 4, and the notification 8 includes the receiving address of NF 4.

S213': NF 3 sends the capability E3 to NF 4, where indication information 4 is carried, and the indication information 4 indicates that a next-hop receiving address is NULL.

It should be understood that, according to the communication method provided in this application, a plurality of types of data, such as the service information, the data packet, and the control policy, can be summarized in a unified framework and service logic, to avoid a case in which a same type of data is transmitted between different network function network elements, or different interface mechanisms need to be customized for transmitting different types of data between different network function network elements. This simplifies a data plane network function network element, facilitates data transmission between network elements, and improves communication efficiency. In addition, the data plane capability center performs centralized scheduling based on subscription requirements of NF 1 and NF 4 and capabilities of NF 2 and NF 3. The data plane capability center filters a subscription request, and then drives a producer network function network element to perform on-demand production after the condition is met. This avoids unnecessary sending and production, and improves communication efficiency. The data plane capability center indicates NF 2 to send E2 to NF 4 and indicates NF 3 to send E3 to NF 1, and NF 3 indicates NF 1 to send E3 to NF 4 by using a concatenation mechanism. This avoids a case in which NF 2 and NF 3 send E2 and E3 to the data plane capability center, and then the data plane capability center sends E2 and E3 to NF 1 and NF 4, to improve the communication efficiency. When a plurality of subscriber NFs subscribe to same data information, data is sent to all the subscriber NFs by using the concatenation mechanism, so that a case in which the same data information is copied for a plurality of times and then separately sent to the subscriber NFs is reduced, and system power consumption is reduced.

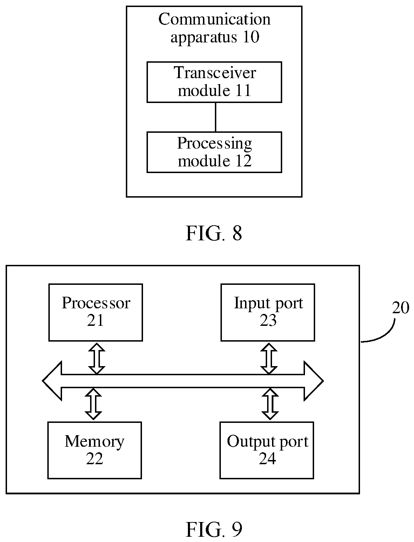

The foregoing describes in detail the methods provided in embodiments of this application with reference to FIG. 1 to FIG. 7. The following describes in detail apparatuses provided in embodiments of this application with reference to FIG. 8 and FIG. 9.

FIG. 8 is a schematic block diagram of an uplink transmission communication apparatus according to an embodiment of this application. As shown in FIG. 8, a communication apparatus 10 may include a transceiver module 11 and a processing module 12.

The transceiver module 11 may be configured to receive information sent by another apparatus, or may be configured to send information to another apparatus, for example, receive first information or send second information. The processing module 12 may be configured to process content of the apparatus, for example, determine that a first condition is met.

In a possible design, the communication apparatus 10 may correspond to the terminal device in the foregoing method embodiments.

Specifically, the communication apparatus 10 may correspond to the first network function network element or the data plane capability center in the method 100 or the method 200 according to embodiments of this application. The communication apparatus 10 may include a module configured to perform an operation performed by the first network function network element or the data plane capability center in the corresponding method. In addition, units in the communication apparatus 10 are separately configured to implement the operation performed by the first network function network element or the data plane capability center in the corresponding method.

For example, when the communication apparatus 10 corresponds to the first network function network element in the method 100, the transceiver module 11 is configured to perform steps S101, S102, and S104.

For example, when the communication apparatus 10 corresponds to the data plane capability center in the method 200, the transceiver module 11 is configured to perform steps S201 to S209, S211 to S216, and S212' and S213', and the processing module 12 is configured to perform S210.

In another possible design, the communication apparatus 10 may correspond to the second network function network element or NF 1 in the foregoing method embodiments.

Specifically, the communication apparatus 10 may correspond to the network device in the method 100 or the method 200 according to embodiments of this application. The communication apparatus 10 may include a module configured to perform an operation performed by the second network function network element or NF 1 in the corresponding method. In addition, units in the communication apparatus 10 are separately configured to implement the operation performed by the second network function network element or NF 1 in the corresponding method.

For example, when the communication apparatus 10 corresponds to the second network function network element in the method 100, the transceiver module 11 is configured to perform steps S101 and S105.

For example, when the communication apparatus 10 corresponds to NF 1 in the method 200, the transceiver module 11 is configured to perform steps S201, S205 and S206, S208, and S213 and S214.

In another possible design, the communication apparatus 10 may correspond to the third network function network element or NF 3 in the foregoing method embodiments.

Specifically, the communication apparatus 10 may correspond to the network device in the method 100 or the method 200 according to embodiments of this application. The communication apparatus 10 may include a module configured to perform an operation performed by the third network function network element or NF 3 in the corresponding method. In addition, units in the communication apparatus 10 are separately configured to implement the operation performed by the third network function network element or NF 3 in the corresponding method.

For example, when the communication apparatus 10 corresponds to the third network function network element in the method 100, the transceiver module 11 is configured to perform steps S102 and S104 and S105, and the processing module 12 is configured to perform step S103.

For example, when the communication apparatus 10 corresponds to NF 3 in the method 200, the transceiver module 11 is configured to perform steps S203, S211 to S213, and S212' and S213'.

FIG. 9 is a schematic diagram of a communication apparatus 20 according to an embodiment of this application.

In a possible design, the apparatus 20 may be a first network function network element, a data plane function network element, a second network function network element, or a third network function network element, or may be a chip, a chip system, or the like located on the first network function network element, the data plane function network element, the second network function network element, or the third network function network element.

The apparatus 20 may include a processor 21 (that is, an example of a processing module) and a memory 22. The memory 22 is configured to store instructions, and the processor 21 is configured to execute the instructions stored in the memory 22, so that the apparatus 20 implements the steps performed by the device in the foregoing possible designs in the methods corresponding to FIG. 1 to FIG. 7.

Further, the apparatus 20 may further include an input port 23 (that is, an example of a transceiver module) and an output port 24 (that is, another example of the transceiver module). Further, the processor 21, the memory 22, the input port 23, and the output port 24 may communicate with each other through an internal connection path, to transfer a control signal and/or a data signal. The memory 22 is configured to store a computer program. The processor 21 may be configured to invoke the computer program from the memory 22 and run the computer program, to control the input port 23 to receive a signal, and control the output port 24 to send a signal, to complete the steps of the terminal device, the radio access network device, the UE, or the base station in the foregoing methods. The memory 22 may be integrated into the processor 21, or may be disposed separately from the processor 21.

Optionally, if the packet transmission apparatus 20 is a communication device, the input port 23 is a receiver, and the output port 24 is a transmitter. The receiver and the transmitter may be a same physical entity or different physical entities. When the receiver and the transmitter are the same physical entity, the receiver and the transmitter may be collectively referred to as a transceiver.

Optionally, if the apparatus 20 is a chip or a circuit, the input port 23 is an input interface, and the output port 24 is an output interface.

In an implementation, it may be considered that functions of the input port 23 and the output port 34 are implemented by using a transceiver circuit or a dedicated transceiver chip. It may be considered that the processor 21 is implemented by using a dedicated processing chip, a processing circuit, a processor, or a general-purpose chip.

In another implementation, it may be considered that the device provided in this embodiment of this application is implemented by using a general-purpose computer. To be specific, program code for implementing functions of the processor 21, the input port 23, and the output port 24 is stored in the memory 22, and a general-purpose processor implements the functions of the processor 21, the input port 23, and the output port 24 by executing the code in the memory 22.

Modules or units in the apparatus 20 may be configured to perform actions or processing processes performed by a random access device (for example, a terminal device) in the foregoing methods. To avoid repetition, detailed descriptions thereof are omitted herein.

For concepts, explanations, detailed descriptions, and other steps of the apparatus 20 that are related to the technical solutions provided in embodiments of this application, refer to the descriptions of the content in the foregoing methods or other embodiments. Details are not described herein again.

It should be understood that, the processor in embodiments of this application may be a central processing unit (CPU, central processing unit), or may be another general-purpose processor, a digital signal processor (DSP, digital signal processor), an application-specific integrated circuit (application-specific integrated circuit, ASIC), a field programmable gate array (field programmable gate array, FPGA), or another programmable logic device, a discrete gate or transistor logic device, discrete hardware component, or the like. The general-purpose processor may be a microprocessor, or the processor may be any conventional processor or the like.

An embodiment of this application further provides a computer-readable storage medium. The computer-readable storage medium stores computer instructions used to implement the method performed by the network device or the terminal device in the foregoing method embodiments.

For example, when the computer program is executed by a computer, the computer is enabled to implement the method performed by the first network function network element, the data plane function network element, the second network function network element, or the third network function network element in the foregoing method embodiments.

An embodiment of this application further provides a computer-readable storage medium. The computer-readable storage medium stores computer instructions used to implement the method performed by the first network function network element, the data plane function network element, the second network function network element, or the third network function network element in the foregoing method embodiments.

For example, when the computer program is executed by a computer, the computer is enabled to implement the method performed by the first network function network element, the data plane function network element, the second network function network element, or the third network function network element in the foregoing method embodiments.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware, firmware, or any combination thereof. When the software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state drive.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for ease of convenience and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each unit may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the method in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first network function network element, first information from a second network function network element, wherein the first information is used to request to subscribe to first data;
sending, by the first network function network element, second information to a third network function network element based on the first information, wherein the second information indicates the third network function network element to produce the first data; and
sending, by the first network function network element, third information to the third network function network element based on the first information, wherein the third information indicates to send the first data to the second network function network element, and the third information comprises a routing address of the second network function network element.

2. The method according to claim 1, wherein
the first data comprises at least one type of the following data: service information, a data packet, and a control policy.

3. The method according to claim 1 or 2, wherein
the first information comprises an identifier of the first data and a first condition, and the first information indicates to request, when the first condition is met, to subscribe to the first data; and
the sending, by the first network function network element, second information and third information to a third network function network element based on the first information comprises:
determining, by the first network function network element, that the first condition is met; and
sending, by the first network function network element, the second information and the third information to the third network function network element.

4. The method according to claim 3, wherein the first condition indicates that second data meets a second condition, and the determining, by the first network function network element, that the first condition is met comprises:
determining, by the first network function network element, that the second data meets the second condition.

5. The method according to claim 4, wherein the method further comprises:
sending, by the first network function network element, eighth information to a fifth network function network element based on the first condition, wherein the eighth information indicates the fifth network function network element to produce the second data; and
receiving, by the first network function network element, the second data from the fifth network function network element.

6. The method according to any one of claims 1 to 5, wherein the method further comprises:
receiving, by the first network function network element, fourth information from a fourth network function network element, wherein the fourth information is used to request to subscribe to the first data; and
sending, by the first network function network element, fifth information and sixth information to the third network function network element based on the fourth information, wherein the fifth information indicates to send the first data to the fourth network function network element, the fifth information comprises a routing address of the fourth network function network element, and the sixth information indicates a sequence of sending the first data to the second network function network element and the fourth network function network element.

7. The method according to claim 6, wherein the sending, by the first network function network element, second information to a third network function network element based on the first information comprises:
sending, by the first network function network element, the second information to the third network function network element based on the first information and the fourth information.

8. The method according to any one of claims 1 to 7, wherein the method further comprises:
receiving, by the first network function network element, seventh information from the third network function network element, wherein the seventh information indicates that the third network function network element can provide the first data.

9. The method according to any one of claims 5 to 8, wherein the method further comprises:
receiving, by the first network function network element, the eighth information from the fifth network function network element, wherein the eighth information indicates that the fifth network function network element can provide the second data.

10. The method according to claim 9, wherein
formats of messages that carry the first data, the first information, the second information, the third information, the fourth information, the fifth information, the sixth information, the seventh information, and the eighth information are consistent.

11. A communication method, comprising:
receiving, by a third network function network element, second information from a first network function network element, wherein the second information indicates the third network function network element to produce first data;
producing, by the third network function network element, the first data based on the second information;
receiving, by the third network function network element, third information from the first network function network element, wherein the third information indicates to send the first data to a second network function network element, and the third information comprises a routing address of the second network function network element; and
sending, by the third network function network element, the first data to the second network function network element based on the third information.

12. The method according to claim 11, wherein
the first data comprises at least one type of the following data: service information, a data packet, and a control policy.

13. The method according to claim 11 or 12, wherein the method further comprises:
sending, by the third network function network element, seventh information to the first network function network element, wherein the seventh information indicates that the third network function network element can provide the first data.

14. The method according to claim 11 or 12, wherein the method further comprises:
receiving, by the third network function network element, fifth information and sixth information from the first network function network element, wherein the fifth information indicates to send the first data to a fourth network function network element, the fifth information comprises a routing address of the fourth network function network element, and the sixth information indicates a sequence of sending the first data to the second network function network element and the fourth network function network element, wherein the sequence of sending the first data is that the first data is sent to the second network function network element first and then to the fourth network function network element; and
sending, by the third network function network element, ninth information to the second network function network element based on the sixth information, wherein the ninth information comprises the routing address of the fourth network function network element, and the ninth information indicates to send the first data to the fourth network function network element.

15. The method according to any one of claims 11 to 14, wherein formats of messages that carry the first data, the second information, the third information, the fifth information, the sixth information, the seventh information, and the ninth information are consistent.

16. A communication method, comprising:
sending, by a second network function network element, first information to a first network function network element, wherein the first information is used to request to subscribe to first data; and
receiving, by the second network function network element, the first data from a third network function network element.

17. The method according to claim 16, wherein
the first data comprises at least one type of the following data: service information, a data packet, and a control policy.

18. The method according to claim 16 or 17, wherein
the first information comprises an identifier of the first data and a first condition, and the first information indicates to request, when the first condition is met, to subscribe to the first data.

19. The method according to any one of claims 16 to 18, wherein the method further comprises:
receiving, by the second network function network element, ninth information from the third network function network element, wherein the ninth information comprises a routing address of a fourth network function network element, and the ninth information indicates to send the first data to the fourth network function network element; and
sending, by the second network function network element, the first data to the fourth network function network element based on the ninth information.

20. The method according to any one of claims 16 to 19, wherein
formats of messages that carry the first data, the first information, and the ninth information are consistent.

21. A communication apparatus, comprising:
a unit configured to implement the method according to any one of claims 1 to 10;
a unit configured to implement the method according to any one of claims 11 to 15; or
a unit configured to implement the method according to any one of claims 16 to 20.

22. A communication apparatus, comprising:
a processor and a memory, wherein
the memory is configured to store a computer program, and
the processor is configured to execute the computer program stored in the memory, to enable the communication apparatus to perform the communication method according to any one of claims 1 to 10, enable the communication apparatus to perform the communication method according to any one of claims 11 to 15, or enable the communication apparatus to perform the communication method according to any one of claims 16 to 20.

23. A computer-readable storage medium, wherein the computer-readable storage medium stores instructions; and when the computer instructions are run on a computer, the computer is enabled to perform the method according to any one of claims 1 to 10, perform the method according to any one of claims 11 to 15, or perform the method according to any one of claims 16 to 20.

24. A chip, comprising:
a memory, configured to store a computer program; and
a processor, configured to read and execute the computer program stored in the memory, wherein when the computer program is executed, the processor performs the method according to any one of claims 1 to 10, performs the method according to any one of claims 11 to 15, or performs the method according to any one of claims 16 to 20.

25. A computer program product, wherein the computer program product comprises computer program code; and when the computer program code is run on a computer, the computer is enabled to perform the method according to any one of claims 1 to 10, perform the method according to any one of claims 11 to 15, or perform the method according to any one of claims 16 to 20.

26. A communication system, wherein the communication system comprises a first network function network element, a second network function network element, and a third network function network element, the first network function network element is configured to perform the method according to any one of claims 1 to 10, the third network function network element is configured to perform the method according to any one of claims 11 to 15, and the second network function network element is configured to perform the method according to any one of claims 16 to 20.
